(19) Europäisches Patentamt
European Patent Office
Office européen des brevets

(11) **EP 1 692 417 B1**

(12) **EUROPEAN PATENT SPECIFICATION**

(45) Date of publication and mention
of the grant of the patent:
**02.05.2012 Bulletin 2012/18**

(51) Int Cl.:
*F16H 61/662* (2006.01)     *F16H 55/56* (2006.01)

(21) Application number: **04808737.3**

(86) International application number:
**PCT/NL2004/000821**

(22) Date of filing: **26.11.2004**

(87) International publication number:
**WO 2005/083304 (09.09.2005 Gazette 2005/36)**

(54) **CONTINUOUSLY VARIABLE TRANSMISSION**

STUFENLOS VERSTELLBARES GETRIEBE

TRANSMISSION VARIABLE EN CONTINU

(84) Designated Contracting States:
**AT BE BG CH CY CZ DE DK EE ES FI FR GB GR HU IE IS IT LI LU MC NL PL PT RO SE SI SK TR**

(30) Priority: **01.12.2003 NL 1024918**

(43) Date of publication of application:
**23.08.2006 Bulletin 2006/34**

(73) Proprietor: **Robert Bosch GmbH**
**70442 Stuttgart (DE)**

(72) Inventors:
 • **VAN DER LEEST, Adrianus, Johannes, Wilhelmus**
   **NL-5388 RX Nistelrode (NL)**
 • **BRANDSMA, Arjen**
   **NL-5045 WN Tilburg (NL)**
 • **VAN SPIJK, Johannes, Gerardus, Ludovicus, Maria**
   **NL-5151 BM Drunen (NL)**

(74) Representative: **Plevier, Gabriel Anton Johan Maria**
**Bosch Transmission Technology B.V.**
**PO Box 500**
**5000 AM Tilburg (NL)**

(56) References cited:
EP-A- 0 828 096     EP-A- 0 931 959
WO-A-2004/053361    WO-A-2004/111500
US-A- 5 182 968     US-A- 5 427 579

• PATENT ABSTRACTS OF JAPAN vol. 2002, no. 04, 4 August 2002 (2002-08-04) -& JP 2001 343056 A (BANDO CHEM IND LTD), 14 December 2001 (2001-12-14)
• PATENT ABSTRACTS OF JAPAN vol. 2002, no. 05, 3 May 2002 (2002-05-03) -& JP 2002 031215 A (NISSAN MOTOR CO LTD), 31 January 2002 (2002-01-31)
• PATENT ABSTRACTS OF JAPAN vol. 1997, no. 04, 30 April 1997 (1997-04-30) & JP 08 326859 A (SUZUKI MOTOR CORP), 10 December 1996 (1996-12-10)
• ROEPER H: "ANFORDERUNGEN AN DIE DRUCKOELVERORGUNGSEINHEIT HYDRAULISCH GESTEUERTER CVT-GETRIEBE" ANTRIEBSTECHNIK, KRAUSSKOPF VERLAG FUR WIRTSCHAFT GMBH. MAINZ, DE, vol. 26, no. 8, 1987, pages 41-47, XP002049540 ISSN: 0722-8546

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a continuously variable transmission in accordance with the preamble of Claim 1. A transmission of this type is generally known and is used to transmit mechanical power between the primary and secondary pulleys of, the transmission, it being possible for a transmission ratio of the transmission with which a couple or rotational speed is transmitted, to be varied continuously within a certain range. As is known, the drive belt is clamped between the two pulley discs, which are substantially frustoconical or conical in form, of the respective pulleys; in the present invention, the transmission ratio of the transmission is defined as the ratio between an effective radial position of the drive belt on the secondary pulley and an effective radial position of the drive belt on the primary pulley, which positions are respectively also known as the secondary running radius and the primary running radius. To enable these running radii, and therefore the transmission ratio, to be varied, at least one of the pulley discs of each pulley is arranged such that it can be moved in the axial direction. JP 2001-343056 A discloses a transmission having the features of the preamble of claim 1.

By way of example, it is known from European patent application EP-A-1 218 654 that the two axially oriented forces with which the drive belt is clamped between the pulley discs of the pulleys, referred to below as the primary clamping force and the secondary clamping force, respectively, represent a crucial factor in determining the torque which can be transmitted between the pulleys via frictional forces between the pulleys and the drive belt, while the ratio between these clamping forces is a crucial factor in determining the transmission ratio. It should be noted that the minimum clamping force required for each pulley to transmit a torque which is supplied can be approximated by the following equation:

$$Kp = \frac{Tp * \cos(\lambda)}{2 * \mu_T * Rp} \qquad (1)$$

In this equation, Kp is the minimum clamping force which is to be exerted on the drive belt by a pulley disc of the primary pulley in order for a primary torque Tp which is supplied to this primary pulley to be transmitted, i.e. virtually without any slip between the drive belt and the respective pulley disc in the tangential or circumferential direction, with a tangent line on the pulley disc at the location of an effective contact point between this pulley disc and the drive belt forming a contact angle $\lambda$ with the radial direction, the said point of contact being located at a radial distance Rp from a centre of rotation of the pulley, which distance corresponds to the said primary running radius, with an effective coefficient of friction $\mu_T$ between the drive belt and the pulley disc prevailing in this tangential direction.

The minimum secondary clamping force Ks required can be calculated in a corresponding way from a secondary torque Ts and a secondary running radius Rs. However, since the ratio between the torque and the running radius Tp/Rp, and Ts/Rs, respectively, ignoring possible losses, is inevitably equal for the two pulleys, the minimum secondary clamping force required is equal to the said minimum primary clamping force required.

In practice, a ratio between the primary and secondary clamping forces, referred for short as the clamping force ratio, will, however, have to be significantly higher or lower than 1, in order to enable a defined desired transmission ratio to be realised. The clamping force ratio required for an equilibrium state of the transmission, i.e. a constant transmission ratio, is referred to below as the equilibrium clamping force ratio, denoted here as the KpKs ratio. For the known transmission, the equilibrium clamping force ratio has a different value in different transmission ratios, this equilibrium clamping force ratio generally being greater than 1 at least in numerically the lowest transmission ratio, i.e. Overdrive, and less than 1 at least in numerically the highest transmission ratio, i.e. Low. The relationship between the transmission ratios of the transmission and the associated equilibrium clamping force ratio for a constant transmission ratio is referred to below as the KpKs curve for short. In a non-equilibrium state of the transmission, in which the transmission ratio is decreasing or increasing, the clamping force ratio required is raised or lowered, respectively, with respect to the said equilibrium clamping force ratio, the extent to which a clamping force ratio which is actually effected, referred to here as the FpFs ratio, deviates from the equilibrium clamping force ratio being the crucial factor in determining the speed at which the transmission ratio changes.

In the equilibrium state of the transmission, therefore, the lower out of the primary and secondary clamping forces has to be at least equal to the minimum level required for the torque transmission, while the higher of the clamping forces is then given by the equilibrium clamping force ratio, i.e. the KpKs ratio. If the KpKs ratio deviates from 1, therefore, at least one of the clamping forces will adopt a higher level than the said minimum required level in order to realise the equilibrium state.

It should be noted that the clamping forces are effected with the aid of suitable, generally known actuation means, which usually act on the axially moveable disc of a pulley, such as a hydraulically acting piston/cylinder assembly or an electrically driven threaded spindle. The clamping forces for each pulley act on the drive belt over the length of a part of the drive belt which is clamped between the respective pulley discs. In the definition according to the invention, the said length is quantified per pulley as the angle which is enclosed by the respectively clamped part of the drive belt and is referred to as the primary and secondary belt angle. In this case, the sum of the primary belt angle and the secondary belt angle is, of course, equal to $2\pi$, i.e. the arc of a circle described by the drive belt for each pulley together always form a complete circle.

Moreover, in the known transmission, at least for one of the pulleys, the said minimum required clamping force is increased and/or multiplied by a safety factor which defines the clamping force which is ultimately desired and actually applied. The effect of an increase of this nature is to ensure that any inaccuracy in the parameters from equation (1) or, for example, an excessively rapid increase in the torque supplied does not cause the abovementioned slipping of the push belt and a pulley.

In a control system which is in widespread use in practice and is generally known as the (VDT) master-slave control, the starting point is a desired secondary clamping force $Ks_{DV}$, which is given by multiplying the minimum secondary clamping force Ks required, calculated for example using equation (1), by a safety factor Sf:

$$Ks_{DV} = Sf*Ks \qquad\qquad\qquad (2)$$

The respective other clamping force, in this case the desired primary clamping force $Kp_{DV}$, which is required in order to realize a desired and constant transmission ratio then follows by multiplying the desired secondary clamping force $Ks_{DV}$ by the numerical value given by the KpKs curve at the transmission ratio, i.e.:

$$Kp_{DV} = KpKs*Ks_{DV} \qquad\qquad\qquad (3)$$

For the transmission which is predominantly used in practice with a contact angle of approximately 11 degrees, the equilibrium clamping force ratio, when using a safety factor of approximately 1.3, which is generally the minimum value used, and depending on the transmission ratio, has been found typically to vary between approximately 0.9 in Low and 1.8 in Overdrive. A relationship of this nature between the transmission ratios of a transmission and the associated equilibrium clamping force or KpKs ratio is referred to as the KpKs curve. Although other parameters, such as the torque level, a rotational speed of the primary axle, the temperature, etc. do influence the KpKs curve, according to the invention these parameters can in a first approximation be considered negligible compared to the influence of the safety factor.

To change the transmission ratio, the primary clamping force Kp which is actually effected is increased or reduced with respect to its desired value $Kp_{DV}$ in order to cause the transmission ratio to change toward Overdrive (increase in Kp) or Low (reduction in Kp). In this context, the more the FpFs ratio deviates from the KpKs ratio, the more quickly the transmission ratio will change.

It follows from equations (2) and (3) that in the Master-Slave control the safety factor should be sufficiently high for it to compensate not only for the above-mentioned possible inaccuracy in the parameters from equation (1) but also for a numerical value of lower than 1 which is given by the KpKs curve in Low. This latter aspect can be explained by not using a safety factor in equation (2), i.e. by setting the factor Sf to be equal to 1. In that case, it follows from equations (2) and (3) that if said KpKs numerical value is lower than 1, the desired primary clamping force $Kp_{DV}$ is lower than the minimum secondary clamping force Ks required. However, as has already been noted, the minimum primary clamping force Kp required to transmit the supplied torque corresponds to the minimum secondary clamping force Ks required, so that the latter desired primary clamping force $Kp_{DV}$ is insufficient and the drive belt will slip with respect to the primary pulley. In other words, it follows from the requirement that the desired primary clamping force $Kp_{DV}$ must be at least equal to the minimum secondary clamping force Ks required that if the KpKs ratio can adopt a value of lower than 1, the safety factor Sf in the Master-Slave control should be at least equal to 1 divided by the lowest KpKs ratio which occurs, $[KpKs]_{Low}$ for short.

In addition, the safety factor in the Master-Slave control serves to realize a type of reserve in addition to the minimum required level of primary clamping force Kp, with the result that it becomes possible to change the transmission ratio toward Low by reducing the primary clamping force Kp without this parameter becoming lower than the minimum primary clamping force Kp required to transmit the torque supplied, i.e. without the drive belt slipping with respect to the primary pulley. The greater this force reserve, the more the ratio which is actually effected, i.e. the FpFs ratio, can deviate from the KpKs ratio and the more quickly the transmission ratio of the transmission can be changed. If the FpFs ratio can adopt a value of lower than 1, the safety factor Sf in the Master-Slave control should be at least equal to 1 divided by the lowest FpFs ratio which occurs, $[FpFs]_{MIN}$ for short.

The lowest FpFs ratio which occurs is generally lower than the lowest KpKs ratio which occurs, and consequently the control has to satisfy the following condition:

$$Sf \geq \frac{1}{[FpFs]_{MIN}} + C \qquad\qquad (4)$$

in which C is a component in the safety factor Sf for the abovementioned compensation for the inaccuracy in the parameters.

If the control draws a distinction between equilibrium and non-equilibrium states of the transmission, at least in the equilibrium state it should satisfy the generally slightly less strict condition that:

$$Sf \geq \frac{1}{[KpKs]_{Low}} + C \qquad\qquad (5)$$

The abovementioned aspects mean that in the known Master-Slave control, and more particularly in the case of the primary clamping force Kp in Low, a relatively high safety factor and therefore also relatively high clamping force levels have to be used. However, this control has the important advantage the torque which can be transmitted by the transmission is in principle determined exclusively by the secondary clamping force level, i.e. separately of the control of the transmission ratio with the aid of the primary clamping force level. As a result, the Master-Slave control can be set up in relatively simple form both in terms of software and in terms of hardware, yet can nevertheless quickly and accurately realize a desired change in the torque which can be transmitted or the transmission ratio.

In practice, the known transmission has in particular proven to be a reliable and efficient automatic transmission between the engine and the driven wheels of a motor vehicle for passenger transportation. In an application of this nature, the efficiency of the drive as a whole and that of the transmission in particular are considered as an essential if not crucial characteristic of the vehicle. The efficiency of the transmission is in this context inversely related to the maximum level of the clamping forces. For example, a frictional loss between drive belt and pulley increases with said force level, as does wear to these components and in particular the drive belt. Also, the power which is required to generate a force, for example by hydraulic or electrical means, generally increases with the level of this force.

It is an object of the present invention to improve the efficiency of the transmission by reducing the level of the higher of the two clamping forces which is required during operation, in particular without at least significantly detracting from the most important functional aspects and the performance of the transmission.

According to the invention, an improvement of this nature is realized in the design according to claim 1, The transmission according to the invention is characterized in that, at least when using a safety factor Sf of around 1.3.

This higher KpKs ratio in Low compared to the known transmission advantageously leads to a lower level of the primary clamping force required. After all, the primary running radius is lowest in Low, and therefore According to equation (1) the required primary clamping force is then highest, at least if the maximum torque supplied is identical or lower in all the other transmission ratios, as is the case when used in a motor vehicle. In other words, the KpKs ratio in Low is the determining factor for in absolute terms the highest level of the clamping force which is realized during operation and on the basis of which the transmission needs to be calculated. The lower this maximum force level which occurs, the lower the demands which are imposed in mechanical terms on the design of the transmission and the more cost-effectively and efficiently the transmission can be produced and operated.

It should be noted that all this is of particular relevance to the transmission provided with the Master-Slave control, since in that case the relatively high safety factor is used in equation (2). Moreover, at least in combination with the Master-Slave control and in equilibrium situations, the safety factor only has to be matched to the phenomena which it is to compensate for, such as the abovementioned inaccuracy in the determination of the clamping forces, which means that the abovementioned value of 1.3 is generally sufficient for this factor.

A KpKs ratio of 1 in Low in principle leads to a minimum and therefore optimum level of both the primary clamping force and the secondary clamping force. However, in particular in combination with the Master-Slave control, a KpKs ratio value in Low of greater than 1 may also be advantageous if the lowest value of the FpFs ratio which occurs during operation is lower than or at most equal to 1. The upper limit for the KpKs ratio in Low is in this context determined according to the invention in such a manner that it is at most equal to the KpKs ratio in Overdrive, so that the conventional shifting of the behavior of the transmission is retained. This means that in a non-equilibrium state in which a constant FpFs ratio is used, the speed with which the transmission ratio of the transmission changes remains accurately controllable and predictable, or at least that it does not have the tendency to adopt a possibly inadmissible value. It is preferable for the KpKs ratio in Overdrive itself to be at least slightly, for example at least 10%, higher than that in Low, so that a stable equilibrium state of the transmission is obtained, in which any variation in one of the clamping forces is of its own accord compensated for by a slight change in the transmission ratio.

According to the invention, the value of the KpKs ratio is certainly also important to the transmission efficiency in Overdrive. A reduction in this value according to the invention has a positive effect on the efficiency and robustness of the transmission, since these two aspects improve as the highest clamping force required, i.e. the primary clamping force in Overdrive, decreases. For example, a frictional loss between drive belt and pulley decreases with a decreasing clamping force level, as does wear to these components. Also, the power which is required for generating the clamping forces, for example by hydraulic or electrical means, generally also decreases with the force level that is to be generated. The efficiency of the transmission in Overdrive is therefore inversely related to the level of the primary clamping force. In this context, in particular the value of the KpKs ratio in Overdrive is a decisive factor in the fuel consumption of a motor vehicle which represents the most important application for the transmission, on account of the fact that in such an application the transmission is generally in or close to Overdrive for a relatively long time, if not most of the time.

The transmission according to the invention advantageously makes use of transmission parameters on the equilibrium clamping force ratio, i.e. KpKs curve, of the transmission, It has been found from an analysis of this phenomenon, on which the invention is based, that in the particular case of the transmission provided with a drive belt of what is known as the push belt type, the KpKs curve deviates unexpectedly and to a considerable extent from what could be expected in an initial, obvious approximation. More particularly, the analysis according to the invention reveals the influence on said KpKs curve of the contact angle, i.e. the ratio between the tangent of the contact angle for the primary pulley and that for the secondary pulley and of the tangential coefficient of friction between push belt and pulley. The equilibrium clamping force ratio, i.e. the KpKs curve, therefore has a numerical value in the range of 1.6 to 1.2 over the entire range of transmission ratios of the transmission, at least when using a safety factor Sf of around 1.3, and moreover preferably has a virtually linear profile. In a particularly advantageous application of the invention, the KpKs ratio is virtually constant under the abovementioned conditions and has a value of approximately 1.3 in Low up to approximately 1.5 in Overdrive.

A transmission of this type in particular takes account of the influence of the absolute value of the contact angles on the functioning thereof, as will be explained in more detail below. A transmission of this type can achieve a considerable increase in efficiency without detracting, at least to a significant degree, from the most important functional aspects and the performance of the transmission provided with the push belt. A linear profile of the KpKs curve is advantageous according to the invention since in that case the transmission, at every transmission ratio, will advantageously react in more or less the same way to a charge in the primary and/or secondary clamping force. This aspect is of benefit to the simplicity and robustness of the transmission control responsible for regulating the desired clamping forces.

The present invention provides a number of exemplary embodiments of the transmission, in which the said equilibrium clamping force ratio is realized in an advantageous way, which examples are described below with reference to the appended explanatory figures.

Figure 1 diagrammatically depicts a cross section through a continuously variable transmission provided with two pulleys and a drive belt in accordance with the prior art.

Figure 2 shows a simplified side view of the transmission shown in Figure 1.

Figure 3 shows a cross section through the push belt which can preferably be used as the drive belt in the continuously variable transmission according to the invention.

Figure 4 shows a side view of a transverse element from the push belt shown in Figure 3.

Figure 5 shows a detail of a pulley disk, and in particular its contact surface, as can be used in combination with the push belt shown in Figure 3 in the continuously variable transmission according to the invention.

Figure 6 illustrates the difference in clamping force between the primary pulley and the secondary pulley as a result of the transmission ratio.

Figure 7 uses a small part of a curved drive belt to illustrate the relationship between a tensile stress therein and a force component which is exerted in the radially inward direction.

Figure 8 shows a diagram which plots the equilibrium clamping force ratio which has been theoretically approximated against the transmission ratio of the known transmission with a constant contact angle of 11 degrees for both pulleys.

Figure 9 shows a diagram in which what is known as the contact angle contour for the primary and secondary pulleys is plotted against the transmission ratio, with the theoretically approximated equilibrium clamping force ratio being equal to 1 irrespective of this transmission ratio.

Figure 10 illustrates the play of forces in the transmission provided with a drive belt of the push belt type and illustrates the difference in clamping force between the primary pulley and the secondary pulley as a result of the transmission ratio.

Figure 11 illustrates, in a tangential cross section of the drive belt and a pulley, the play of forces in the contact between them under the influence of the axial clamping force which is exerted.

Figure 12 shows a diagram in which the optimum contact angle contour, as it is known, is plotted for the primary pulley and the secondary pulley against the transmission ratio for a transmission provided with a drive belt of the push belt type.

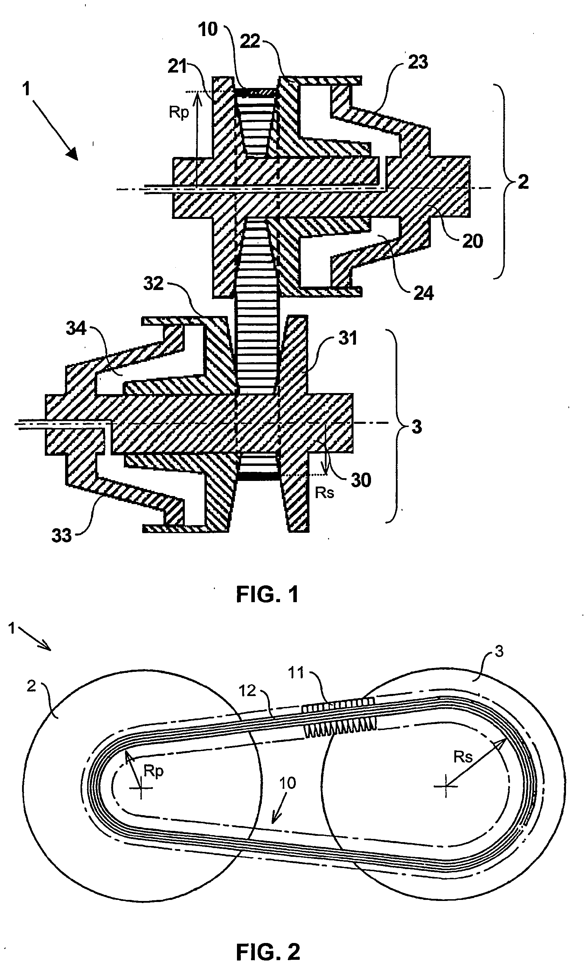

Figure 1 diagrammatically depicts a cross section through a continuously variable transmission 1 according to the prior art. The known transmission 1 comprises a primary pulley 2, which can be driven by an engine (not shown) with a couple of forces Tp, and a secondary pulley 3, which can drive a load (not shown) with couple of forces Ts. Both pulleys 2 and 3 are provided with a pulley disc 21, 31, which is fixed to the respective pulley axle 20, 30, and with a pulley disc 22, 32 which can be displaced in the axial direction with respect to the said axle 20, 30. A drive belt 10, more particularly a push belt 10, is clamped between the pulley discs 21, 22, 31, 32, so that with the aid of friction mechanical power can be transmitted between the two axles 20 and 30. An axially oriented force with which the drive belt 10 is clamped in place for each pulley 2, 3, referred to below as the primary clamping force Kp and the secondary clamping force Ks, respectively, is in this case realized by the application of a hydraulic pressure in a respective pressure chamber 24, 34 of the two pulleys 2 and 3.

The transmission ratio Rs/Rp of the transmission 1 is determined by the ratio between a secondary running radius Rs and a primary running radius Rp of the drive belt 10, i.e. the effective radial position thereof between the pulley discs 21, 22, 31 and 32 of the respective pulleys 2 and 3. The said running radii Rp and Rs, and therefore the transmission ratio Rs/Rp, defined in accordance with the invention, of the transmission 1 can be varied by the displaceable discs 22, 32 being moved in opposite axial directions over the respective pulley axles, 20, 30. In Figure 1, the transmission 1 is illustrated with a small transmission ratio Rs/Rp, i.e. with a relatively large primary running radius Rp and a relatively small secondary running radius Rs.

It should be noted that the transmission ratio Rs/Rp, the primary running radius Rp and the secondary running radius Rs are in a clearly defined and geometrically determined relationship with respect to one another, this relationship being determined, inter alia, by the length of the drive belt 10, the distance between the axes of rotation of the respective pulleys 2, 3 and the maximum and minimum running radii Rp and Rs, so that these variables can be calculated from the others as desired.

Figure 2 shows a further, side view of the known transmission 1, with the primary pulley 2 with the primary axle 20 on the left-hand side of the figure and the secondary pulley 3 with the secondary axle 30 on the right-hand side of the figure. Unlike in Figure 1, in this figure the transmission 1 is now illustrated with a relatively high transmission ratio Rs/Rp, in which the primary running radius Rp is smaller than the secondary running radius Rs, with the result that, during operation, the primary pulley 2 will have a lower rotational speed than the secondary pulley 3. The drive belt 10 shown is what is known as a push belt 10, which comprises a virtually continuous, series of transverse elements 11, only a few of which are shown, for the sake of simplicity, and at least one set 12 of a number of radially nested, continuous, flat and thin metal rings.

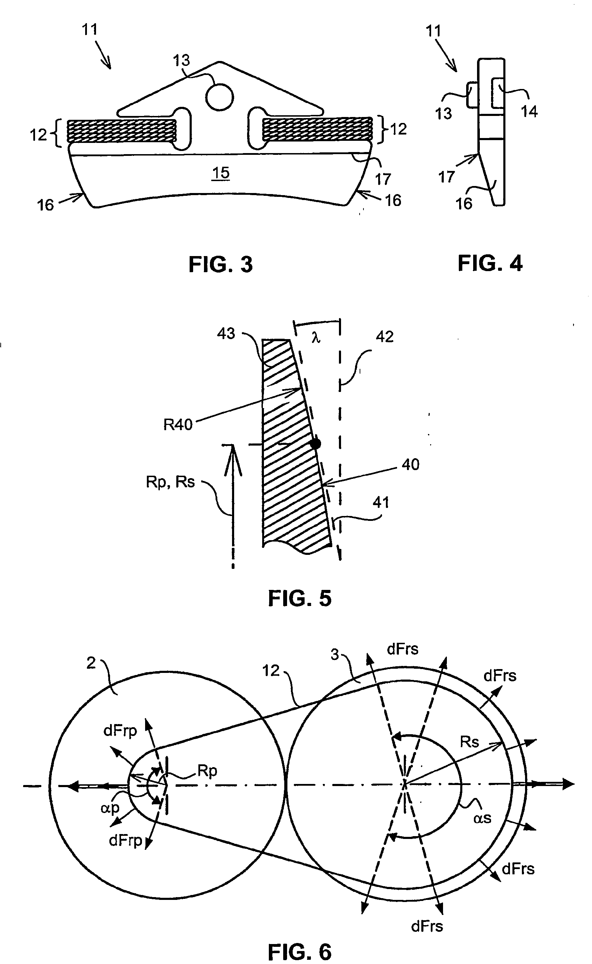

This push belt 10 is shown in more detail in Figures 3 and 4, Figure 3 showing a cross section through the push belt 10 and Figure 4 showing a side view of a transverse element 11 therefrom. The cross section shows a front view of the transverse element 11, which is provided on either side with a recess, in each of which there is a set of rings 12. The set of rings 12 and the transverse element 11 retain one another in the radial or height direction, but the transverse elements 11 can move along the sets of rings 12 in the circumferential direction thereof. Furthermore, the transverse elements 11 are provided with a protuberance in the circumferential direction of the push belt 10, also referred to as the projection 13, and with a recess 14 arranged in an opposite main side of the element 11, which projection 13 and recess 14 serve to stabilize the series of transverse elements 11 in the push belt 10 with respect to one another.

A bottom section 15 of the transverse element 11 tapers, so that adjacent transverse elements 11 can tilt with respect to one another and the push belt 10 can describe an arc, such as where it is clamped between the pulley disks 21, 22, 31, 32 of the respective pulleys 2 and 3. It should be noted that the abovementioned effective radial position, i.e. the effective running radius Rp, Rs of the push belt 10, substantially corresponds to a radial position of the topside of the bottom section 15 of the transverse element 11, which topside is also referred to as the tilting line 17 of the transverse elements 10, along which the latter are in contact with one another in the said arc. The bottom section 15 is furthermore provided, on either side with what are known as running surfaces 16, via which the transverse element 11 is clamped between the pulley discs 21, 22; 31 32, the rotation of a driving pulley 2 being transmitted via friction to the clamped transverse elements 11. This may give rise to a considerable pushing force between the transverse elements 11, with the result that they push one another forward over the sets of rings 12 in the direction of the driven pulley 3. Then, where the push belt 10 is clamped between the discs 31 and 32 of the driven pulley 3, the pushing force which is present between the transverse elements 11 is virtually completely transmitted via friction to the driven pulley 3. Finally, the transverse elements 11 push one another back, exerting a relatively low pushing force, from the driven pulley 3 to the driving pulley 2. The sets of rings 12 in this case ensure that the transverse elements 11 continue to follow the path which is intended for the push belt 10.

Figure 5 illustrates a detail of a pulley disk 43 on the basis of a cross section through it as seen in the tangential direction. A so-called contact surface 40 of the pulley disk 43, by means of which it comes into contact with a running surface 16 of the transverse elements 11, is provided with a curvature with an optionally variable radius of curvature R40, with a contact angle λ, defined between a tangent line 41 in a point R on the contact surface 40 and the radial direction 42, increasing as seen in the said radial direction. Therefore, the contact surfaces 40 in the transmission 1, as seen in the tangential cross section, describe a contour which can be defined as the relationship between the local contact angle λ and the transmission ratio Rs/Rp of the transmission 1. For each pulley 2, 3, the said contour is referred to as the primary contact angle contour λp(Rs/Rp) and the secondary contact angle contour λs(Rs/Rp), respectively, with the fixed and moveable discs 21, 22, 31 and 32 of a pulley 2, 3 being provided with identical contours. It is also preferable for the two pulleys 2 and 3 to be identical in form, i.e. to be provided with contact angle contours λp(Rs/Rp) and λs(Rs/Rp) which are mirror-symmetrical with respect to one another.

In order to be able to interact optimally with the curved contact surfaces 40 of the pulleys 2 and 3, the running surfaces 16 of the transverse element 11, as seen in the cross section of the push belt 10 illustrated in Figure 3, are provided with a curvature. In this case, a range of contact angles λ which at least corresponds to contact angle contours λp(Rs/Rp) and λs(Rs/Rp) defined by the contact surfaces 40 of the pulleys 2 and 3, is defined in the contour of the running surfaces 16.

The clamping force ratio, the KpKs ratio, which is required for an equilibrium state of the transmission 1, i.e. for a constant transmission ratio, originates from the equilibrium condition whereby per pulley 2, 3 the tensile forces Ft generated in the belt sets 12 of the drive belt 10 should be equal to one another. This equilibrium condition is illustrated in Figure 6. For each pulley 2 and 3, the tensile force Ft is produced as a result of the radial forces Frp and Frs, respectively, acting on the drive belt 10 in the radial direction, which forces Frp and Frs are produced as a result of the local contact angle λp, λs and the clamping force Kp, Ks which is applied between the discs 21 and 22, 31 and 32 respectively, for each pulley 2, 3 and is substantially axially oriented. When this is written out for the primary pulley 2, the following relationship applies:

$$Frp = Kp * \tan(\lambda p) \qquad (6)$$

The radial forces Frp and Frs act on the running surfaces 16 of the transverse elements 11 over the length of the parts of the drive belt 10 which are clamped between the pulley discs 21, 22, 31, 32 of the respective primary pulley 2 and secondary pulley 3. The said length can be quantified for each pulley 2, 3 as an angle which is enclosed by the clamped part of the drive belt 10, designated here as the primary belt angle αp and the secondary belt angle αs, respectively. The radial forces Frp and Frs which are required for equilibrium are then determined by summing, over the respective belt angles αp and αs, the tensile force Ft per unit of the belt angle dα. When written out for the primary pulley 2, the following relationship therefore applies:

$$Frp = \int_{0}^{\alpha p} \frac{Ft}{Rp} * Rp * d\alpha \qquad (7)$$

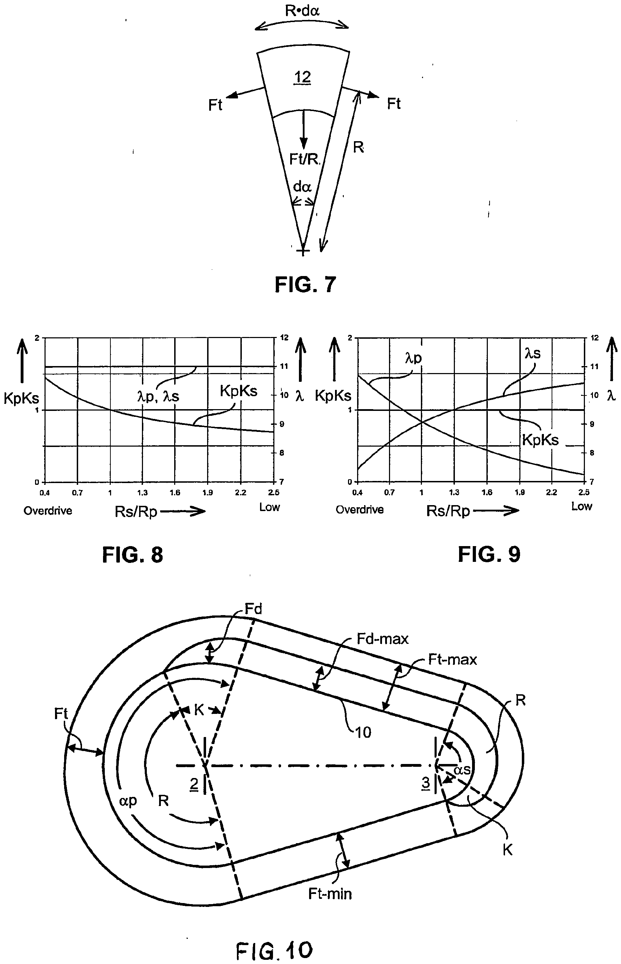

The derivation of equation (3) is illustrated in Figure 7 on the basis of a small part of the belt set 12.

Equations (6) and (7) can be derived in a corresponding way for the secondary pulley 3, with the said equilibrium condition for a constant transmission ratio whereby the tensile stress Ft which is generated applies to both pulleys 2 and 3, so that the following relationship applies to the equilibrium clamping force ratio KpKs:

$$KpKs = \frac{Kp}{Ks} = \frac{\tan(\lambda s)}{\tan(\lambda p)} * \frac{\int_{0}^{\alpha p} Ft * d\alpha}{\int_{0}^{\alpha s} Ft * d\alpha} = \frac{\tan(\lambda s) * \alpha p}{\tan(\lambda p) * \alpha s} \qquad (8)$$

in which the belt angles αp and αs vary as a function of the respective running radius Rp, Rs and therefore also as a function of the transmission ratio Rs/Rp. A relationship of this nature between the belt angles αp and αs and the running radii Rs and Rp is determined by the geometry of the transmission 1 and may, for example, be approximated relatively

accurately as:

$$\alpha_p = \pi + 2 * \arcsin\left(\frac{Rp - Rs}{2 * Rp_{MAX}}\right) \text{ and } \alpha s = 2\pi - \alpha p \qquad (9)$$

with Rs (Rp, $Rp_{MIN}$, $Rp_{MAX}$) :

$$2 * \sqrt{(2 * Rp_{MAX})^2 - (Rs - Rp)^2} + \pi * (Rs + Rp) +$$

$$2 * \arcsin\left(\frac{Rs - Rp}{2 * Rp_{MAX}}\right) * (Rs - Rp) = 2 * \sqrt{(2 * Rp_{MAX})^2 - (Rp_{MAX} - Rp_{,MIN})^2} +$$

$$\pi * (Rp_{MAX} + Rp_{min}) + 2 * \arcsin\left(\frac{Rp_{MAX} - Rp_{MIN}}{2 * Rp_{MAX}}\right) * (Rp_{MAX} - Rp_{MIN})$$

$$(10)$$

where $Rp_{MIN}$ is the smallest primary running radius Rp which occurs and $Rp_{MAX}$ is the largest primary running radius Rp which occurs. In the derivation of equations (9) any (10), it has been assumed that the two pulleys 2 and 3 are positioned as close together as possible in the radial direction, as is the case, for example, in Figure 6, but as is also generally desired in motor vehicles.

The solution, which is to be determined iteratively or numerically, to equations (8), (9) and (10), for the KpKs ratio in relation to the transmission ratio Rs/Rp, with the contact angles $\lambda$p and $\lambda$s having a constant and equal value - in this example 11 degrees - is given in Figure 8.

It can be concluded from the above analysis, which, incidentally, is independent of the type of drive belt 10, meaning that it applies not only to the push belt 10 shown in Figures 2-4 but also to a rubber V belt, a metal chain or the like, that the KpKs ratio can be influenced by selecting values for the primary contact angle $\lambda$p and/or the secondary contact angle $\lambda$s which differ from one another. The ratio between the contact angles $\lambda$p, $\lambda$s as a function of the transmission ratio Rs/Rp of the transmission, with the equilibrium ratio of the clamping forces Kp and Ks - referred to as the KpKs curve - advantageously being equal to 1 for all the transmission ratios Rs/Rp, should in this case satisfy equation (4) with Kp/Ks=1:

$$\frac{\tan(\lambda s)}{\tan(\lambda p)} = \frac{\alpha s}{\alpha p} \qquad (11)$$

Incidentally, it follows from equation (11) that the contact angles $\lambda$p, $\lambda$s should be equal in value in the transmission ratio Rs/Rp in which the belt angles $\alpha$p and as - and therefore also the running radii Rp and Rs - are equal to one another.

One possible solution to equation (11) is shown in the diagram in Figure 9, in which the respective contact angle $\lambda$p, $\lambda$s for the primary pulley 2 and the secondary pulley 3 is plotted against the transmission ratio Rs/Rp in the so-called contact angle contours $\lambda$p(Rs/Rp) and $\lambda$s(Rs/Rp). The theoretically approximated KpKs ratio is in this case, therefore equal to 1 in all possible transmission ratios Rs/Rp. The diagram shown in Figure 9 applies to a typical transmission 1 with a smallest primary running radius $Rp_{MIN}$ of approximately 30 mm and with a largest primary running radius $Rp_{MAX}$ of approximately 75 mm combined with an equal and smallest possible radial dimension of the pulleys 2 and 3.

Although the analysis discussed above does suggest this, the abovementioned and apparently optimum contact angle contours $\lambda$p(Rs/Rp) and $\lambda$s(Rs/Rp) do not in all cases form the most ideal solution for an improved efficiency of the transmission 1 via influencing the equilibrium clamping force ratio KpKs, at least not for the present transmission 1 provided with the push belt 10.

Furthermore, in particular in combination with the Master-Slave control, it may be highly advantageous to select the KpKs ratio to be greater than 1, as has already been described above. Secondly, the Applicant has discovered, by means of an analysis of this phenomenon on which the invention is based, that in the particular case of the transmission 1 provided with a push belt 10, during operation of this transmission, a unique play of forces is produced in the push belt 10, which is of considerable influence on the equilibrium ratio of the clamping forces Kp and Ks. Moreover, in this respect it has been found that in the battle for an improved efficiency of the transmission 1 by influencing equilibrium clamping force ratio KpKs as result of the contact angles λp and λs being adapted, the mechanical load on the push belt 10, and in particular a fatigue load of the sets of rings 12 thereof, but also, for example, the dynamic performance of the transmission 1 is influenced.

In view of the complexity of these phenomena and the interaction between them, an analytical description thereof cannot be realized or can only be realized with extreme difficulty. However, according to the invention a qualitative analysis is sufficient, and an improved transmission design is proposed on the basis thereof.

The qualitative analysis according to the invention is based on a pushing force Fd between the transverse elements 11, a tensile force Ft in the rings and a normal force in the radial direction Fr between the individual transverse elements 11 and the sets of rings 12 as occurs on the pulleys 2 and 3. In this context, the pushing force Fd is substantially responsible for the transmission of torque between the pulleys 2 and 3, with the sets of rings 12 and the transverse element 11 being held together and forced into a desired path together with the pulleys 2 and 3. According to the invention, the following equation (written out here for the primary pulley) applies to each pulley 2, 3:

$$Kp * \tan(\lambda p) = \int \frac{\delta[Ft(\alpha p)] - \delta[Fd(\alpha p)]}{Rp} * Rp * \delta \alpha p \qquad (12)$$

or, for equilibrium between the two pulleys 2 and 3:

$$KpKs = \frac{\tan(\lambda s)}{\tan(\lambda p)} * \frac{\int \delta[Ft(\alpha p)] - \delta[Fd(\alpha p)] * \delta \alpha p}{\int \delta[Ft(\alpha s)] - \delta[Fd(\alpha s)] * \delta \alpha s} \qquad (13)$$

It follows from these equations that in the case of the push belt 10, the equilibrium clamping force ratio KpKs is influenced not only by the contact angles λp, λs but also by the pushing force Fd and more particularly by the distribution thereof over the belt angle αp, αs. According to the invention, it is stated on the basis of equation (11) that the pushing force Fd partially compensates for the radial forces Frp and Frs generated by the respective clamping force Kp, Ks. Moreover, the transverse elements 11 and the sets of rings 12 are in frictional contact with one another, so that as a result of a difference in speed between them a build-up or decrease in tensile force Ft occurs in the rings, which phenomenon, in the case of the push belt 10, further complicates an analytical solution to the equilibrium clamping force ratio KpKs. The present invention therefore proposes a qualitative analysis.

The qualitative effect is illustrated in Figure 10 and is based on the knowledge that during operation of the transmission 1, when a torque Tp is being transmitted between the pulleys 2 and 3, for each pulley 2, 3 the belt angle αp, αs is composed of two successive parts. In a first part of the belt angle, known as the creep angle K, the pushing force Fd between the transverse elements 11 of the push belt 10 is built up or reduced in the frictional contact with the pulley 2, 3. In a second part of the belt angle, known as the rest angle R, the pushing force Fd is approximately constant and at least virtually equal to zero on the driving pulley - in this case the primary pulley 2 - and equal to a maximum value Fd-max on the driven pulley - in this case the secondary pulley 3. The creep angle K over which the build-up or reduction takes place under identical conditions - i.e. an identical coefficient of friction and normal force between the transverse element 11 and the respective pulley 2, 3 - is of approximately corresponding length, so that at a relatively high clamping force the creep angle K is relatively small with respect to the total belt angle αp, αs.

All this is reproduced in Figure 10 for the lowest transmission ratio, i.e. Overdrive, with the double arrows indicating the level of the pushing force Fd which prevails locally between adjacent transverse elements 11 in the push belt 10, but not the direction of the pushing force Fd, since this is oriented in the longitudinal direction of the push belt 10. The figure also shows a possible curve for the tensile force Ft in the set of rings over the circumference of the push belt 10, which in this example counteracts the transfer of the torque Tp. After all, the tensile force has the highest Ft-max on the side of the push belt 10 where the highest pushing force Fd-max is present and the lowest level Ft-min on the side of the push belt 10 where the lowest pushing force Fd, specifically virtually no pushing force, is present. The curve of the tensile force Ft may, incidentally, also be precisely the opposite, depending in particular on the level of the torque Tp.

In qualitative terms, it follows from Figure 10 that, at least in Overdrive, the equilibrium clamping force ratio KpKs, in the case of the push belt, has a value which is significantly different than what could be expected according to equation (8). After all, a cumulative pushing force Fd over the primary belt angle αp is significantly lower than the cumulative pushing force Fd over the secondary belt angle αs. The result of this is that the optimum contact angle contours λp(Rs/Rp) and λs(Rs/Rp) derived above do not apply to the transmission 1 provided with the push belt 10.

Furthermore, it follows from the above analysis that the equilibrium clamping force ratio KpKs can not only be influenced by the ratio between the primary and secondary contact angles λp and λs but also can be reduced in Overdrive by shortening the rest angle R or lengthening the creep angle K at least on one of the two pulleys 2, 3. For the secondary pulley 3, this will lead to a decrease in the cumulative pushing force Fd over the secondary belt angle αs, while for the primary pulley 2 it will lead to an increase in this cumulative pushing force, which in both cases according to equation (12) leads to a reduction in the equilibrium clamping force ratio KpKs. In Overdrive, a shortened rest angle R on the secondary pulley 3 is not the most advantageous option, since in this case this is determined by the desired safety factor Sf, which in the context of the present invention is considered as a given boundary condition. On the other hand, according to the invention it is advantageously possible to have a beneficial influence on the KpKs by lengthening the creep angle R on the primary pulley 2, at least for the primary running radius Rp in Overdrive.

According to the invention, the creep angle can be lengthened by at least surprisingly making the transmission of force between the primary pulley 2 and the push belt 10 less efficient, for example by selecting a lower effective coefficient of friction μ between them (cf. also equation (1)). According to accepted theory, the coefficient of friction μ of a lubricated frictional contact as is customarily used in the present transmission can be reduced by the design of the pulley 2, for example by lowering the contact pressure between push belt 10 and pulley 2 - for example by using a relatively large radius of curvature R40 for the primary pulley disks - or by lowering the surface roughness of the pulley disks 21 and 22.

The abovementioned measures relate in particular to the contact point between the push belt 10 and the primary pulley 2 at a transmission ratio Rs/Rp of less than 1, i.e. to a relatively large primary running radius Rp, more particularly the largest primary running radius Rp which determines the transmission ratio Overdrive. At the other positions in the transmission 1, i.e. at a relatively small primary running radius Rp, such as for example the primary running radius Rp in Low, and at any desired running radius Rs on the secondary pulley 3, by contrast, it is advantageous not to use the abovementioned measures and to make the transmission of force between push belt 10 and pulley 2, 3 as efficient as possible. On the one hand since at the abovementioned relatively small primary running radius Rp and an associated relatively large secondary running radium Rs, i.e. in a transmission ratio Rs/Rp close or equal to the transmission ratio Low, the equilibrium clamping force ratio KpKs is still virtually equal to 1, so that the increase in efficiency will be relatively low, and on the other hand since the effectiveness of the transmission of force is crucial to the maximum torque which can be transmitted at a given clamping force Kp or Ks not only at the abovementioned relatively small primary running radius Rp but also at a relatively small secondary running radius Rs.

The measures discussed above may be employed independently of or in addition to the application of the contact angle contours λp(Rs/Rp) and λs(Rs/Rp). According to the invention, however, a more detailed analysis reveals that the KpKs curve which in principle is the most optimum with regard to the transmission efficiency, with the equilibrium ratio of the clamping forces constantly equal to 1, requires contact angle contours λp(Rs/Rp) and λs(Rs/Rp) which cause other functional aspects of the transmission 1 to deteriorate. More particularly, the total required difference between the smallest and largest contact angles λp, λs may become disadvantageously large. On the one hand, the smallest contact angle λp, λs required may, for example, be so small that the radial component Fr of the clamping force Kp, Ks is too small to overcome friction in the radial direction between the push belt 10 and the pulley 2, 3, as a result of which it would be impossible to change the transmission ratio of the transmission 1. On the other hand, the largest contact angle λp, λs required may, for example, be so large that the sets of rings 12 are excessively loaded by the radial component Fr of the clamping force Kp, Ks. A description of such phenomena can be found, for example, in EP-0 798 492 and the Dutch patent application 1022157 in the name of the Applicant, which was not published before the priority date of the present application.

Yet another disadvantageous consequence of a large difference between the smallest and largest contact angles λp, λs required is that the contact surfaces 40 of the pulleys 2 and 3 and the running surfaces 16 of the transverse elements 11 have to be relatively strongly curved in order to allow a difference of this nature to be realized within a limited dimension. As a result, the contact stress between them may adopt an undesirable or even inadmissible value. As has already been discussed above, the alignment of the transmission 1 is also determined by the contact angle contours λp(Rs/Rp) and λs(Rs/Rp) and is a limiting factor therefor.

In the empirical approximation according to the invention which incorporates these aspects, the contact angles, at least in Overdrive, have to satisfy the following condition:

$$1 < \frac{\tan(\lambda p)}{\tan(\lambda s)} \le 1.6 \qquad\qquad (14)$$

More particularly, this ratio moreover in Low satisfies the following condition:

$$0.6 \le \frac{\tan(\lambda p)}{\tan(\lambda s)} < 1 \tag{15}$$

The analysis discussed above merely states a condition for the ratio between the contact angles $\lambda p$ and $\lambda s$ but does not yet give the optimum values for these parameters. According to the invention, these optimum values are found as follows.

According to the invention, the lower limit for the contact angles $\lambda p$ and $\lambda s$, on the one hand, is preferably selected to be as low as possible, since as a result the radial force Frp, Frs and therefore also the tensile force Ft in the sets of rings 12 will advantageously be low. After all, said tensile force Ft makes no contribution or scarcely any contribution to the transmission of the torque Tp supplied, while the sets of rings 12 are subjected to mechanical load by the tensile force Ft. On the other hand, according to the invention, under all circumstances it must be possible for the drive belt 10 to be displaced in the radial direction between the pulley disks 21, 22, 31, 32, in order to allow the transmission ratio Rs/Rp to be altered. For this purpose, said radial force Frp must be able to overcome at least a friction Fw between the drive belt 10 and a pulley 2, 3. Written out for the primary pulley 2, the following relationship then applies:

$$\frac{Kp}{\cos(\lambda p)} * \tan(\lambda p) = \frac{Frp}{\cos(\lambda p)} = Fw > Fw = \mu_R * Fn = \mu_R * \frac{Kp}{\cos(\lambda p)} \tag{16}$$

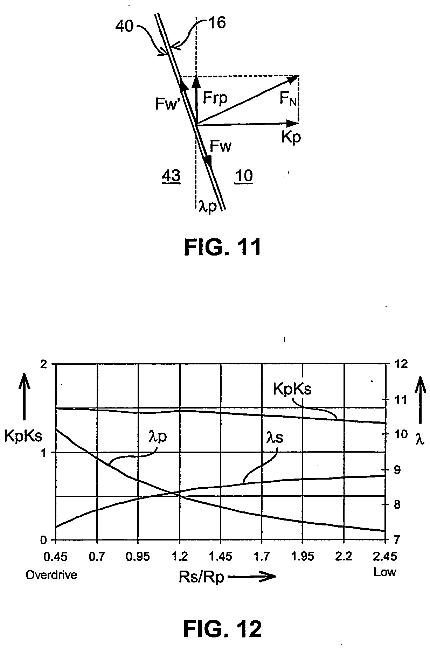

where $\mu_R$ is a coefficient of friction which is measured in the radial direction in the contact between a running surface 16 of the drive belt 10 and the contact surface 40 of a pulley disk 43, and where Fn is normal force in that contact. Equation (16) is schematically illustrated in Figure 11, which shows the forces - Kp, Fw, Frp, Fn - which are active within said contact. Equation (16) gives rise to the condition that a contact angle $\lambda$ must be greater than the arc-tangent of the radial coefficient of friction $\mu_R$. In the lubricated metal/metal contact between the pulleys 2 and 3 and the drive belt 10 of the transmission, a maximum value of approximately 0.12 typically applies for $\mu_R$. Therefore, according to the invention the primary contact angle $\lambda p$ in Low and the secondary contact angle $\lambda s$ in Overdrive is preferably approximately equal to 7 degrees. The complete contact angle contours $\lambda p(Rs/Rp)$ and $\lambda s(Rs/Rp)$ can then be approximated iteratively using equations (13).

Yet another suitable boundary condition for solving the boundary condition required by equation (13) may be that the contact angle contours $\lambda p(Rs/Rp)$ and $\lambda s(Rs/Rp)$ for each pulley 2, 3 is a continuous curve, respectively rising continuously on the secondary pulley 3 and falling continuously on the primary pulley 2. Finally, it may be advantageous if the disks 21, 22, 31 and 32 of the pulleys are shaped identically, which is advantageous in particular in terms of production and assembly engineering considerations.

With the contact angle contours $\lambda p(Rs/Rp)$ and $\lambda s(Rs/Rp)$ in which the abovementioned aspects and factors, such as the largest and smallest permissible values for the contact angle, the lowest permissible value for the radius of curvature R40 of the contact surfaces 40 and the radius of curvature R16 of the running surfaces 16, as well as the alignment of the transmission, are taken into account during the determination of the,optimum KpKs curve, the latter has a more or less linear curve from 1.5 in Overdrive to 1.3 in Low when using a safety factor of approximately 1.3. The diagram shown in Figure 12 plots both this optimum KpKs curve and the associated optimum contact angle contours $\lambda p(Rs/Rp)$ and $\lambda s(Rs/Rp)$ against the transmission ratio Rs/Rp. The diagram has been approximated by an empirical route, taking account of all the above-discussed characteristics and properties of the transmission 1 provided with a drive belt 10 of the push belt type. It can be seen from this figure that the smallest contact angles both for the primary pulley $\lambda p$ and for the secondary pulley $\lambda s$ are both just slightly larger than 7 degrees, specifically approximately 7.3 degrees, and that the largest primary contact angle $\lambda p$ is approximately 10 degrees and the largest secondary contact angle $\lambda s$ is approximately 9 degrees. The optimum ratio of the tangent of the contact angles $\lambda p$, $\lambda s$ is therefore approximately 1.4 in Overdrive and approximately 0.8 in Low.

**Claims**

1.  A continuously variable transmission (1) for motor vehicles, provided with a primary pulley (2) and a secondary pulley (3), around which there is arranged a drive belt (10) which, at least when the transmission (1) is operating, is clamped, via substantially axially oriented running surfaces (16) arranged on either side of the drive belt (10), between two conical pulley disks (21, 22) of the primary pulley (2) with a primary clamping force (Kp) and between two conical pulley disks (31, 32) of the secondary pulley (3) with a secondary clamping force (Ks) in order to be able to transmit a supplied torque (Tp) with the aid of frictional forces from the primary pulley (2) to the secondary pulley (3), a contact surface (40) of at least one pulley disk (44) with respect to the drive belt (10) being provided, at least as seen in a cross section thereof that is oriented perpendicular to a tangential direction, with a curvature, with the result that in said cross section a contact angle (λ) between a tangent line (41) on the contact surface (40) and a radial direction (42) varies in relation to a radial position (Rp, Rs) of a contact point between the respective running surface (16) of the drive belt (10) and the contact surface (40) varies between a lowest value at the location of a radially innermost position on the contact surface (40) and a highest value at the location of a radially outermost position on the contact surface (40), and a transmission ratio (Rs/Rp) of the transmission (1) being defined as the quotient between the radial position (Rs) for the secondary pulley (3) and the radial position (Rp) for the primary pulley (2), **characterized in that** as a result of the contact angle (λ) being adapted in relation to said radial position (Rp, Rs) and in all transmission ratios (Rs/Rp) of the transmission (1) between the largest transmission ratio (Rs/Rp), i.e. Low, and the smallest transmission ratio (Rs/RP), i.e. Overdrive, a clamping force ratio (KpKs) between the primary clamping force (Kp) and the secondary clamping force (Ks) has a value in the range between 1.2 and 1.6 and preferably in the range between 1.3 in Low and 1.5 in Overdrive.

2. The continuously variable transmission (1) as claimed in claim 1, **characterized in that** a safety factor (Sf) between a minimum primary or secondary clamping force (Kp; Ks) required for the transmission of the torque (Tp) supplied in the respective transmission ratio (Rs/Rp) mentioned and a desired primary or secondary clamping force (Kp$_{DV}$; Ks$_{DV}$) is approximately 1.3.

3. The continuously variable transmission (1) as claimed in one of the preceding claims, **characterized in that**, at least for a constant transmission ratio (Rs/Rp), a desired secondary clamping force (Ks$_{DV}$) is determined by multiplying a minimum secondary clamping force (Ks) required for the transmission of the supplied torque (Tp) by a safety factor of greater than 1, and **in that** a desired primary clamping force (Kp$_{DV}$) is determined by multiplying said desired secondary clamping force (Ks$_{DV}$) by the clamping force ratio (KpKs) in said constant transmission ratio (Rs/Rp).

4. The continuously variable transmission (1) as claimed in one of the preceding claims, **characterized in that** the contact angle (λ) in relation to said radial position (Rp, Rs) is at least substantially equal for the two pulley disks (21, 22; 31, 32) of a respective pulley (2, 3).

5. The continuously variable transmission (1) as claimed in one of the preceding claims, **characterized in that** a lowest value of the contact angle (λ) for the pulley disks (21, 22, 31, 32) in relation to said radial position (Rp, Rs) is at least substantially equal for the pulley disks (21, 22, 31, 32) of the two pulleys (2; 3).

6. The continuously variable transmission (1) as claimed in one of the preceding claims, **characterized in that** a highest value for the contact angle (λ) for the pulley disks in relation to said radial position (Rp, Rs) is higher for the pulley disks (21, 22) of the primary pulley (2) than the corresponding value for the pulley disks (31, 32) of the secondary pulley (3).

7. The continuously variable transmission (1) as claimed in one of the preceding claims, **characterized in that** the drive belt (10) is of what is known as the push belt type and is provided with at least one set of rings (12) and a large number of transverse elements (11), which can move along the set of rings (12) in the circumferential direction thereof and are provided with the running surfaces (16).

8. The continuously variable transmission (1) as claimed in one of the preceding claims, **characterized in that** the contact angle (λ) in relation to said radial position (Rp, Rs) corresponds for the two pulley disks (21, 22; 31, 32) of a respective pulley (2, 3), and **in that**, at least in the smallest transmission ratio (Rs/Rp) of the transmission (1), a ratio between the contact angle (λ) for the primary pulley (λp) and the contact angle (λ) for the secondary pulley (λs) satisfies the condition that:

$$1 < \frac{\tan(\lambda p)}{\tan(\lambda s)} \leq 1.6$$

9. The continuously variable transmission (1) as claimed in the preceding claim, **characterized in that**, at least in the largest transmission ratio (Rs/Rp) of the transmission (1), the ratio between said contact angles ($\lambda$p, $\lambda$s) satisfies the condition that:

$$0.6 < \frac{\tan(\lambda p)}{\tan(\lambda s)} \leq 1$$

10. The continuously variable transmission (1) as claimed in claim 8 or 9, **characterized in that** for both the primary pulley (2) and the secondary pulley (3) the lowest value for the contact angle ($\lambda$) is approximately 7 degrees.

11. The continuously variable transmission (1) as claimed in claim 8, 9 or 10, **characterized in that** for the primary pulley (2) the highest value for the contact angle ($\lambda$) is approximately 10 degrees, and **in that** the for the secondary pulley (3) the highest value for the contact angle ($\lambda$) is approximately 9 degrees.

**Patentansprüche**

1. Stufenloses Getriebe (1) für Kraftfahrzeuge, das mit einer Primärrolle (2) und einer Sekundärrolle (3) versehen ist, um die ein Antriebsriemen (10) angeordnet ist, der zumindest im Betrieb des Getriebes (1) über im Wesentlichen axial ausgerichtete Laufflächen (16), die auf beiden Seiten des Antriebsriemens (10) angeordnet sind, zwischen zwei konischen Rollenscheiben (21, 22) der Primärrolle (2) mit einer Primärklemmkraft (Kp) und zwischen zwei konischen Rollenscheiben (31, 32) der Sekundärrolle (3) mit einer Sekundärklemmkraft (Ks) eingeklemmt ist, um in der Lage zu sein, ein zugeführtes Drehmoment (Tp) mit Hilfe von Reibkräften von der Primärrolle (2) auf die Sekundärrolle (3) zu übertragen, wobei eine Kontaktfläche (40) mindestens einer Rollenscheibe (43) bezüglich des Antriebsriemens (10), zumindest in seinem Querschnitt, der senkrecht zu einer Tangentialrichtung ausgerichtet ist, gesehen, mit einer Krümmung versehen ist, was dazu führt, dass in dem Querschnitt ein Kontaktwinkel ($\lambda$) zwischen einer tangentialen Linie (41) an der Kontaktfläche (40) und einer radialen Richtung (42) bezüglich einer radialen Position (Rp, Rs) eines Kontaktpunkts zwischen der jeweiligen Lauffläche (16) des Antriebsriemens (10) und der Kontaktfläche (40) zwischen einem niedrigsten Wert an der Stelle einer radial am weitesten innen liegenden Position auf der Kontaktfläche (40) und einem höchsten Wert an der Stelle einer radial am weitesten außen liegenden Position auf der Kontaktfläche (40) variiert, und wobei ein Übersetzungsverhältnis (Rs/Rp) des Getriebes (1) als der Quotient zwischen der radialen Position (Rs) für die Sekundärrolle (3) und der radialen Position (Rp) für die Primärrolle (2) definiert ist, **dadurch gekennzeichnet, dass** aufgrund dessen, dass der Kontaktwinkel ($\lambda$) bezüglich der radialen Position (Rp, Rs) angepasst wird, und bei allen Übersetzungsverhältnissen (Rs/Rp) des Getriebes (1) zwischen dem größten Übersetzungsverhältnis (Rs/Rp), das heißt Niedrig, und dem kleinsten Übersetzungsverhältnis (Rs/Rp), das heißt Overdrive, ein Klemmkraftverhältnis (KpKs) zwischen der Primärklemmkraft (Kp) und der Sekundärklemmkraft (Ks) einen Wert in dem Bereich zwischen 1,2 und 1,6 und vorzugsweise in dem Bereich zwischen 1,3 in Niedrig und 1,5 in Overdrive, aufweist.

2. Stufenloses Getriebe (1) nach Anspruch 1, **dadurch gekennzeichnet, dass** ein Sicherheitsfaktor (Sf) zwischen einer minimalen Primär- oder Sekundärklemmkraft (Kp; Ks), die für die Übertragung des in dem genannten jeweiligen Übersetzungsverhältnis (Rs/Rp) zugeführten Drehmoments (Tp) erforderlich ist, und einer Sollprimär- oder -sekundärklemmkraft (Kp$_{DV}$; Ks$_{DV}$) ca. 1,3 beträgt.

3. Stufenloses Getriebe (1) nach einem der vorhergehenden Ansprüche, **dadurch gekennzeichnet, dass** mindestens für ein konstantes Übersetzungsverhältnis (Rs/Rp) eine Sollsekundärklemmkraft (Ks$_{DV}$) durch Multiplizieren einer Mindestsekundärklemmkraft (Ks), die für die Übertragung des zugeführten Drehmoments (Tp) erforderlich ist, mit einem Sicherheitsfaktor von über 1 bestimmt wird und dass eine Sollprimärklemmkraft (Kp$_{DV}$) durch Multiplizieren der Sollsekundärklemmkraft (Ks$_{DV}$) mit dem Klemmkraftverhältnis (KpKs) in dem konstanten Übersetzungsverhältnis (Rs/Rp) bestimmt wird.

4. Stufenloses Getriebe (1) nach einem der vorhergehenden Ansprüche, **dadurch gekennzeichnet, dass** der Kontaktwinkel ($\lambda$) bezüglich der radialen Position (Rp, Rs) für die beiden Rollenscheiben (21, 22; 31, 32) einer jeweiligen Rolle (2, 3) zumindest im Wesentlichen gleich ist.

5. Stufenloses Getriebe (1) nach einem der vorhergehenden Ansprüche, **dadurch gekennzeichnet, dass** ein nied-

rigster Wert des Kontaktwinkels ($\lambda$) für die Rollenscheiben (21, 22, 31, 32) bezüglich der radialen Position (Rp, Rs) für die Rollenscheiben (21, 22, 31, 32) der beiden Rollen (2; 3) zumindest im Wesentlichen gleich ist.

6. Stufenloses Getriebe (1) nach einem der vorhergehenden Ansprüche, **dadurch gekennzeichnet, dass** ein Höchstwert für den Kontaktwinkel ($\lambda$) für die Rollenscheiben bezüglich der radialen Position (Rp, Rs) für die Rollenscheiben (21, 22) der Primärrolle (2) höher ist als der entsprechende Wert für die Rollenscheiben (31, 32) der Sekundärrolle (3).

7. Stufenloses Getriebe (1) nach einem der vorhergehenden Ansprüche, **dadurch gekennzeichnet, dass** der Antriebsriemen (10) ein sogenanntes Schubgliederband ist und mit mindestens einem Satz von Ringen (12) und einer großen Anzahl von Querelementen (11) versehen ist, die sich entlang dem Satz von Ringen (12) in Umfangsrichtung davon bewegen können und mit den Laufflächen (16) versehen sind.

8. Stufenloses Getriebe (1) nach einem der vorhergehenden Ansprüche, **dadurch gekennzeichnet, dass** sich der Kontaktwinkel ($\lambda$) bezüglich der radialen Position (Rp, Rs) für die beiden Rollenscheiben (21, 22; 31, 32) einer jeweiligen Rolle (2, 3) entspricht und dass zumindest bei dem kleinsten Übersetzungsverhältnis (Rs/Rp) des Getriebes (1) ein Verhältnis zwischen dem Kontaktwinkel ($\lambda$) für die Primärrolle ($\lambda$p) und dem Kontaktwinkel ($\lambda$) für die Sekundärrolle ($\lambda$s) die folgende Bedingung erfüllt:

$$1 < \frac{\tan(\lambda p)}{\tan(\lambda s)} \leq 1,6$$

9. Stufenloses Getriebe (1) nach einem der vorhergehenden Ansprüche, **dadurch gekennzeichnet, dass** zumindest bei dem größten Übersetzungsverhältnis (Rs/Rp) des Getriebes (1) das Verhältnis zwischen den Kontaktwinkeln ($\lambda$p, $\lambda$s) die folgende Bedingung erfüllt:

$$0,6 < \frac{\tan(\lambda p)}{\tan(\lambda s)} \leq 1$$

10. Stufenloses Getriebe (1) nach Anspruch 8 oder 9, **dadurch gekennzeichnet, dass** sowohl für die Primärrolle (2) als auch für die Sekundärrolle (3) der niedrigste Wert für den Kontaktwinkel ($\lambda$) ca. 7 Grad beträgt.

11. Stufenloses Getriebe (1) nach Anspruch 8, 9 oder 10, **dadurch gekennzeichnet, dass** für die Primärrolle (2) der höchste Wert für den Kontaktwinkel ($\lambda$) ca. 10 Grad beträgt und dass für die Sekundärrolle (3) der höchste Wert für den Kontaktwinkel ($\lambda$) ca. 9 Grad beträgt.

## Revendications

1. Transmission à variation continue (1) pour véhicules automobiles, dotée d'une poulie primaire (2) et d'une poulie secondaire (3) autour desquelles est disposée une courroie d'entraînement (10) qui, au moins lorsque la transmission (1) fonctionne, est serrée, par l'intermédiaire de surfaces de roulement (16) orientées sensiblement axialement disposées de chaque côté de la courroie d'entraînement (10), entre deux disques de poulie coniques (21, 22) de la poulie primaire (2) avec une force de serrage primaire (Kp), et entre deux disques de poulie coniques (31, 32) de la poulie secondaire (3) avec une force de serrage secondaire (Ks), afin de pouvoir transmettre un couple fourni (Tp) à l'aide de forces de friction de la poulie primaire (2) à la poulie secondaire (3), une surface de contact (40) d'au moins un disque de poulie (43) par rapport à la courroie d'entraînement (10) étant dotée, au moins tel que vu dans une section transversale de ce disque de poulie qui est orientée perpendiculairement à une direction tangentielle, d'une courbure, avec pour conséquence que, dans ladite section transversale, un angle de contact ($\lambda$) entre une ligne tangente (41) sur la surface de contact (40) et une direction radiale (42) varie, en fonction d'une position radiale (Rp, Rs) d'un point de contact entre la surface de roulement respective (16) de la courroie d'entraînement (10) et la surface de contact (40), entre une valeur la plus basse à l'emplacement d'une position radialement la plus à l'intérieur sur la surface de contact (40) et une valeur la plus élevée à l'emplacement d'une position radialement la plus à l'extérieur sur la surface de contact (40), et un rapport de transmission (Rs/Rp) de la transmission (1) étant défini comme le quotient entre la position radiale (Rs) pour la poulie secondaire (3) et la position radiale (Rp) pour la poulie primaire (2), **caractérisée en ce qu'**en conséquence de l'adaptation de l'angle de contact (λ) en fonction de ladite position radiale (Rp, Rs) et dans tous les rapports de transmission (Rs/Rp) de la transmission (1) entre le plus grand rapport de transmission (Rs/Rp), c'est-à-dire le rapport bas, et le plus petit rapport de transmission (Rs/Rp), c'est-à-dire le rapport surmultiplié, un rapport de forces de serrage (KpKs) entre la force de serrage primaire (Kp) et la force de serrage secondaire (Ks) présente une valeur dans la plage entre 1,2 et 1,6 et de préférence dans la plage entre 1,3 en rapport bas et 1,5 en rapport surmultiplié.

2. Transmission à variation continue (1) selon la revendication 1, **caractérisée en ce qu'**un coefficient de sécurité (Sf) entre une force de serrage primaire ou secondaire minimale (Kp ; Ks) requise pour la transmission du couple (Tp) fourni dans le rapport de transmission respectif (Rs/Rp) mentionné et une force de serrage primaire ou secondaire désirée ($Kp_{DV}$ ; $Ks_{DV}$) est approximativement 1,3.

3. Transmission à variation continue (1) selon l'une quelconque des revendications précédentes, **caractérisée en ce qu'**au moins pour un rapport de transmission constant (Rs/Rp), une force de serrage secondaire désirée ($Ks_{DV}$) est déterminée en multipliant une force de serrage secondaire minimale (Ks) requise pour la transmission du couple fourni (Tp) par un coefficient de sécurité supérieur à 1, et **en ce qu'**une force de serrage primaire désirée ($Kp_{DV}$) est déterminée en multipliant ladite force de serrage secondaire désirée ($Ks_{DV}$) par le rapport de force de serrage (KpKs) dans ledit rapport de transmission constant (Rs/Rp).

4. Transmission à variation continue (1) selon l'une quelconque des revendications précédentes, **caractérisée en ce que** l'angle de contact (λ) en fonction de ladite position radiale (Rp, Rs) est au moins sensiblement égal pour les deux disques de poulie (21, 22 ; 31, 32) d'une poulie respective (2, 3).

5. Transmission à variation continue (1) selon l'une quelconque des revendications précédentes, **caractérisée en ce qu'**une valeur la plus basse de l'angle de contact (λ) pour les disques de poulie (21, 22, 31, 32) en fonction de ladite position radiale (Rp, Rs) est au moins sensiblement égale pour les disques de poulie (21, 22, 31, 32) des deux poulies (2 ; 3).

6. Transmission à variation continue (1) selon l'une quelconque des revendications précédentes, **caractérisée en ce qu'**une valeur la plus élevée pour l'angle de contact (λ) pour les disques de poulie en fonction de ladite position radiale (Rp, Rs) est plus élevée pour les disques de poulie (21, 22) de la poulie primaire (2) que la valeur correspondante pour les disques de poulie (31, 32) de la poulie secondaire (3).

7. Transmission à variation continue (1) selon l'une quelconque des revendications précédentes, **caractérisée en ce que** la courroie d'entraînement (10) est du type connu en tant que courroie de poussée et est dotée d'au moins un ensemble d'anneaux (12) et d'un grand nombre d'éléments transversaux (11) qui peuvent se déplacer le long de l'ensemble d'anneaux (12) dans la direction circonférentielle de ce dernier et qui sont dotés des surfaces de roulement (16).

8. Transmission à variation continue (1) selon l'une quelconque des revendications précédentes, **caractérisée en ce que** les angles de contact (λ) en fonction de ladite position radiale (Rp, Rs) se correspondent pour les deux disques de poulie (21, 22 ; 31, 32) d'une poulie respective (2, 3), et **en ce qu'**au moins dans le rapport de transmission le plus petit (Rs/Rp) de la transmission (1), un rapport entre l'angle de contact (λ) pour la poulie primaire (λp) et l'angle de contact (λ) pour la poulie secondaire (λs) satisfait à la condition suivant laquelle :

$$1 < \frac{\tan(\lambda p)}{\tan(\lambda s)} \leq 1,6$$

9. Transmission à variation continue (1) selon la revendication précédente, **caractérisée en ce qu'**au moins dans le rapport de transmission le plus grand (Rs/Rp) de la transmission (1), le rapport entre lesdits angles de contact (λp, λs) satisfait à la condition suivant laquelle :

$$0,6 < \frac{\tan(\lambda p)}{\tan(\lambda s)} \leq 1$$

**10.** Transmission à variation continue (1) selon la revendication 8 ou 9, **caractérisée en ce qu'**à la fois pour la poulie primaire (2) et pour la poulie secondaire (3) la valeur la plus faible pour l'angle de contact (λ) est approximativement 7 degrés.

**11.** Transmission à variation continue (1) selon la revendication 8, 9 ou 10, **caractérisée en ce que**, pour la poulie primaire (2), la valeur la plus élevée pour l'angle de contact (λ) est approximativement 10 degrés, et **en ce que**, pour la poulie secondaire (3), la valeur la plus élevée pour l'angle de contact (λ) est approximativement 9 degrés.

**FIG. 1**

**FIG. 2**

**FIG. 3**

**FIG. 4**

**FIG. 5**

**FIG. 6**

**FIG. 7**

**FIG. 8**

**FIG. 9**

FIG. 10

**FIG. 11**

**FIG. 12**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001343056 A
- EP 1218654 A
- EP 0798492 A
- NL 1022157